# EUROPEAN PATENT APPLICATION

(11) **EP 2 750 016 A1**
(43) Date of publication of application: **02.07.2014**
(21) Application number: 12008647.5
(22) Date of filing: 28.12.2012
(51) Int. Cl.: G06F 3/0488, G06F 3/0482, G06F 3/0485

(54) **Method of operating a graphical user interface and graphical user interface**

(71) Applicant: Sony Mobile Communications AB, 221 88 Lund (SE)
(72) Inventor: Mårtensson, Linus, 222 35 Lund (SE); Thörn, Ola, 216 12 Limhamn (SE); Rasmusson, Jim, 235 41 Vellinge (SE); DE Léon, David, 224 57 Lund (SE)
(74) Representative: Banzer, Hans-Jörg

(57) **Abstract**

Various embodiments relate to techniques for scrolling (200) through a number of menu items. A user input (160) is detected and initiates said scrolling (200) using a time dependence (131) of a scrolling speed (130) along a scrolling path. Upon a detected gesture (170) of a user object, which is contactless and above a touch sensitive surface and occurs during said scrolling (200), the time dependence (131) and/or the scrolling speed (130) of the scrolling (200) are selectively adjusted. Said selectively adjusting depends on the detected gesture (170).

## Description

### Technical field

Various embodiments relate to a method of operating a graphical user interface and a graphical user interface. In particular, various embodiments relate to scrolling through a number of menu items and respective techniques which allow detecting a gesture of an user object contactless and above a touch sensitive surface and, in response to said detecting, adjust a time dependence and/or a scrolling speed of the scrolling.

### Background

Graphical user interfaces are known which display menu items. Menu items may relate to entries of a graphical menu of the graphical user interface which can be selected or activated. Upon said selecting, a certain functionality may be accessed or invoked, e.g., a sub-menu and/or a function or application and/or a change of settings, etc. For example, menu items may relate to one or more of the following: applications, audio and/or video tracks, system settings, pictures, downloaded items.

Often a plurality of such menu items is displayed on a display. A user may select and activate a particular one of the plurality of menu items, depending on his selection choice. For this, at one given point in time the plurality of menu items may be displayed on the display at least partially or entirely. For example by a touch action the user may select one of the menu items from the plurality of menu items for activation. Another possibility would be to have an input curser which is marking or highlighting a particular one of the plurality of menu items and allow the user to toggle the curser through the plurality of menu items. The particular one of the plurality of menu items which is highlighted by the curser can be activated by a user input, e.g., by pushing a button and/or by pushing a virtual button and/or by pushing a graphical representation of the menu item.

Moreover, a situation may occur where there are too many menu items to be displayed as a whole on the display at the same time. In such a case, the graphical user interface typically provides means to subsequently display different ones of the plurality of menu items on the display.

In situations as set forth above, i.e., when it is desired to move a cursor through the plurality of menu items and/or when there are too many menu items such that they cannot be displayed on the display as a whole, it is known to provide scrolling through the plurality of menu items. Scrolling may relate to: continuously displaying different ones of the number of menu items and/or moving a cursor between different ones of the number of menu items.

It is possible that the plurality of menu items has a certain order or arrangement. In such a case, it may be expedient to refer to the plurality of menu items as a number of menu items, e.g., the number comprising and order and/or arrangement. It is possible that said arrangement and order of the number of menu items has certain influences on said scrolling. For example, the scrolling may relate to: sequentially moving through the order of the number of menu items. In various examples the number of menu items may have an order corresponding to at least one of the following: alphabetical order, chronological order, order according to user preferences, last changed, last accessed, most often accessed.

Techniques are known which initiate said scrolling upon user input. It is possible to maintain and execute said scrolling for a given time period after the user input. Such techniques of scrolling are sometimes referred to as inertia scrolling. This is because a certain inertia is associated with the number of menu items such that after the user actuation triggering said scrolling, the scrolling will persist based on the model relating to the inertia. In particular for large numbers of menu items, this may have the effect that the user can trigger said scrolling with a single user input and then may not have to repeat said user input for the time during which due to the inertia said scrolling is continued. In other words: by such means it may be possible to scroll through a larger number of menu items in response to a single user input triggering said scrolling.

Yet such techniques face certain restrictions. For example, if said inertia is chosen too large, i.e., if said scrolling pertains for a time period too long after the triggering user action, there may be a high likelihood that the desired menu item is skipped over or missed - the scrolling moves by the menu item without stopping. In other words: if said inertia is chosen to be too large, it may be difficult for a user to stop said scrolling at the desired menu item. However, on the other side, if the inertia of said scrolling is chosen to be too small, scrolling through large numbers of menu items may be cumbersome and time-consuming, because the user input triggering said scrolling may have to be repeated comparably frequently.

Therefore, a need exists to provide advanced techniques of operating a graphical user interface providing scrolling through a number of menu items. In particular, a need exists to provide flexible and adaptive scrolling.

### Summary

This need is met by the features of the independent claims. The dependent claims define embodiments.

According to an aspect, a method of operating a graphical user interface having a number of menu items is provided. The method comprises displaying the number of menu items at least partially on a display and detecting a user input. The method further comprises, in response to said detecting of the user input, scrolling through the number of menu items, wherein said scrolling is defined by a time dependence of a scrolling speed along a scrolling path. The method further comprises during said scrolling, detecting a gesture of the user object contactless and above a touch sensitive surface. The method further comprises, in response to said detecting of the gesture and during said scrolling, selectively adjusting the time dependence of the scrolling speed and/or selectively adjusting the scrolling speed, wherein said selectively adjusting depends on the detected gesture.

It may be possible that the display and the touch sensitive surface are provided as one unit, i.e., as a touch sensitive display. Touch sensitive displays are known for example as an arrangement of a liquid crystal display (LCD) adjacent to a capacitive sensor arrangement. Yet, in general, it may be possible that the display and the touch sensitive surface are two different and separated elements. For example, in various scenarios, a display may be a television display, a computer display, a projected image projected by a projector, etc. In such scenarios, the touch sensitive surface may be arranged on a separate input element, such as a portable device or the like. As can be seen, the inter-relationship and/or mechanical arrangement between the display and the touch sensitive surface is not particularly limited.

Contactless and above the touch sensitive surface may relate to: at a certain distance above the touch sensitive surface and/or offset from the touch sensitive surface, e.g., along a direction parallel to a normal of the touch sensitive surface. This may be in contrast to a touch action on the touch sensitive surface. Such a touch action may be executed in immediate contact with the touch sensitive surface where no or only a small gap between the user object and the touch sensitive surface exists.

The user input may be one of the following: pushing of a button, a touch action on the touch sensitive surface, a gesture contactless and above the touch sensitive surface, a voice input, a shaking of the graphical user interface, etc.

In order to comprehensively set the temporal behavior of said scrolling, it may be required to initially set the scrolling speed and to set the time dependence of the scrolling speed by some function or temporal evolution. For example, the time dependence of said scrolling may relate to a change of the scrolling speed as a function of time - i.e., relate to the first derivative of the scrolling speed with respect to time (time derivative). The scrolling speed may relate to a value at a given point in time, e.g., at the beginning of said scrolling or at any other arbitrary point in time. It should be understood that in general the time dependence of the scrolling speed may be - at least initially - set independently of the scrolling speed itself, and vice versa. For example, the time dependence and/or the scrolling speed may be chosen according to a predefined value or may be dependent on the user input itself. In particular, they may be chosen such that said scrolling lasts for a certain scrolling time period after the detected user input (inertia scrolling). A larger (smaller) time dependence may relate to a smaller (larger) inertia. The inertia scrolling may, in other words, relate to a scrolling which is damped / decaying over time. In the light of the above, the time dependence of the scrolling speed and the scrolling speed may be referred to as scrolling parameters as they may comprehensively define said scrolling.

During said scrolling may respectively refer to the scrolling time period during which the scrolling speed has a finite value and does not equal zero. For example, if the time dependence relates to a deceleration of said scrolling over time, this scrolling time period may be well defined by the scrolling speed (e.g., at the beginning of said scrolling or at any other arbitrary reference time) and the deceleration value of the time dependence. Likewise, the scrolling time period may be defined by a certain value of inertia for the inertia scrolling. In general, the time dependence of the scrolling speed may relate to an acceleration, deceleration, or constant value of the scrolling speed.

The scrolling path may define a direction of said scrolling and/or an extent of said scrolling. The extent of said scrolling may correlate with the scrolling time period. For example, the scrolling path may be dependent on the user input and/or the number of menu items and/or an arrangement of the menu items on the display. For example, the scrolling path may follow an arrangement of the number of menu items in ascending or descending order.

Adjusting of the time dependence and/or of the scrolling speed may relate to changing or leaving unchanged the respective parameters as present prior to said detecting of the gesture. For example, these initial parameters, i.e., the time dependence and/or the scrolling speed, may be pre-defined and/or may be dependent on the user input and/or may be dependent on the number of menu items and/or may be dependent on the scrolling path, etc. In other words, said scrolling may be initiated by the user input using a certain time dependence and/or a certain scrolling speed. The certain time dependence and/or the certain scrolling speed may be changed by said adjusting in response to the detected gesture. Yet it should be understood that the selectively executing of said adjusting may allow for leaving the certain time dependence and/or scrolling speed unchanged, e.g., if a particular gesture is detected which is not intended to alter these parameters. Also if no gesture is detected at all, the certain time dependence and/or scrolling speed may be left unchanged.

By such techniques, an increased flexibility in the operating of the graphical user interface, in particular in a controlling of said scrolling may be achieved. In particular, by said selectively adjusting of the time dependence of the scrolling speed and/or of the scrolling speed during said scrolling, it may be possible to selectively prolong or shorten said scrolling - at a point in time after the triggering user input. In other words: it may be possible to adjust the inertia of the inertia scrolling during said scrolling.

In a non-limiting, practical example, if a user realizes during said scrolling that the desired menu item of the number of menu items will not be reached given the present time dependence of the scrolling speed and/or the present scrolling speed, the user may change these parameters by providing an appropriate input via the gesture of the user object. For example, by a certain gesture (e.g., waving of a user's index finger, performing a flick with a finger, moving a finger up or down, etc.) the time dependence of the scrolling speed may be decreased such that the scrolling speed decreases more slowly over time and/or he scrolling speed may be increased.

Such effects may be particularly desirable if compared to techniques where due to a secondary user input, e.g., a touch action in contact with the touch sensitive surface, the scrolling may be entirely stopped. In such a case the time dependence and/or the scrolling speed may not be adjusted during said scrolling, but the scrolling may be merely aborted. The various options and nuances of control of said scrolling may not be available in such techniques - in particular it may not be possible to adjust the time dependence and/or the scrolling speed during said scrolling.

For example, the gesture may relate to a user using a part of the body, e.g., a hand or fingers of the hand. In particular, the user object may relate to an index finger or a thumb of a user. It is also possible that the user object relates to a pen or stylus or other input means handled by the user. For example, said detecting of the gesture of the user object may comprise: detecting a position of the user object as a function of time, and/or detecting the gesture by comparing the position of a user object over time with a set of predefined gestures. In other words, by tracing a position of the user object contactless and above the touch sensitive surface as a function of time, it may be possible to identify a particular gesture, in particular from a predefined set of gestures. By providing such a predefined set of gestures an increased likelihood of successful detecting of the gesture may be achieved. It should be understood that the position of the user object over time may correspond to a movement of the user object, i.e., a change in position, but can also relate to a resting of the user object, i.e., a constant position of the user object over time. Both cases may be referred to as a gesture. The particular type of the detected gesture may influence said adjusting qualitatively and/or quantitatively. For example, if a certain type of gesture is detected, the time dependence and/or the scrolling speed may be increased, while, for another type of gesture the time dependence and/or the scrolling speed may be decreased. Likewise, depending on the gesture, e.g., the gesture type and/or a gesture amplitude, the amount said adjusting may vary. For example, when a certain gesture relates to a large (small) change in position of the user object over time, the amount of said adjusting of the time dependence and/or of the scrolling speed may be large (small).

It should be understood that such examples as presented above and as will be presented in the following are exemplatory and should not be construed as being limiting. In particular, the dependence of said adjusting on the detected gesture may vary both quantitatively as well as qualitatively. To this respect, the inter-relationship between the detected gesture and the adjusting of the time dependence of the time dependence and/or of the scrolling speed may not be particular limited.

Various sensor techniques may be employed in order to detect the gesture of the user object contactless and above the touch sensitive surface. For example, a capacitive sensor may be employed underneath the touch sensitive surface which is configured to detect changes in capacitance on and in contact with the touch sensitive surface, as well as contactless and above the touch sensitive surface. For example, electrodes may be provided which provide a stray electric field which extends for a certain distance above the touch sensitive surface. In such a case, a presence of the user object in the stray electric field may distort the latter and this distortion may be sensed as a change in capacitance. From such signals, it may be possible to determine a distance between the user object and the touch sensitive surface, qualitatively and/or quantitatively. Yet, other techniques may be employed for said detecting of the gesture of the user object contactless and above the touch sensitive surface. For example, magnetic field sensors (electric field sensors) may be employed which detect a distortion of the magnetic stray field (electric stray field). Other techniques may rely on an optical detection of the user object above the touch sensitive surface. Such techniques may employ an optical camera or an infrared sensor or photoresistor provided in a vicinity of the touch sensitive surface having a field of view which covers the area above the touch sensitive surface. Typically, for a number of portable electronic devices such as mobile phones, such a set up may be readily in place where a touch sensitive surface and an optical camera arranged close by; the optical camera may typically point in a direction parallel to a normal of the touch sensitive surface. Determining the distance between the user object and the touch sensitive surface may be possible by means of image processing and/or stereoscopic techniques.

Other techniques which may be employed alternatively or additionally for said detecting of the gesture of the user object contactless and above the touch sensitive surface may be at least one of the following: sonar, radar, doppler shift, ultrasound, microphone / sound detection.

Techniques which have been discussed above primarily with respect to said detecting contactless and above the touch may be employed additionally or alternatively for said detecting of the user input, e.g., in contact with the touch sensitive surface.

For example, the user input may be executed by the user object, as well. For example, the user input may be a touch action of the user object on the touch sensitive surface. The scrolling path may be defined by the touch action. The touch action may be a sliding of the user object at least partially along the scrolling path. Such a touch action may be referred to as "flick touch action", because it may refer to a short flick of, e.g., the index finger or thumb of a user on the touch sensitive surface. Flicks may be quick, linear movements of the user object associated with scrolling actions and commands.

For example, said displaying may comprise displaying the number of menu items in a one-dimensional list arranged along a first direction, wherein the scrolling path is substantially linear along the first direction. For example, the first direction may be parallel or substantially parallel to an edge of the touch sensitive surface and/or the display. For example, the one-dimensional list may be arranged parallel to one of the edges of the touch sensitive surface and/or the display.

Yet it should be understood that in various scenarios other types of arrangement of the number of menu items may be more preferable. For example, it may be possible to display the number of menu items in a two-dimensional array arranged along a fist and second direction on the display (matrix arrangement). It may also be possible to display the number of menu items for example in a three-dimensional manner where the third dimension is graphically indicated by displaying given ones of the number of menu items smaller than other menu items of the number of menu items. The particular type of said displaying with a number of menu items is not limited; it should be understood that the scrolling path may be dependent on the type of displaying of the number of menu items, in particular if they are displayed in a one-dimensional, two-dimensional, or three-dimensional list.

The time dependence of the scrolling speed may relate to a deceleration of the scrolling speed over time. If it is detected that the gesture relates to a movement of the user object at least partially along the scrolling path contactless and above the touch sensitive surface, the time dependence may be adjusted such that the deceleration of the scrolling speed is decreased.

For example, adjusting the time dependence such that the deceleration of the scrolling speed is decreased may relate to a prolonged scrolling time period, i.e., the scrolling speed may reach zero only after a longer time. In other words, the inertia of the inertia scrolling may be increased.

If the user object, e.g., a user's finger, moves along the scrolling path, it may be likely that the user intends to perform a further user input which triggers aid scrolling again, i.e., renews said scrolling. In such a case, it may be favorable to decrease the time dependence of said scrolling such that even during said movement of the user object at least partially along the scrolling path, i.e., in response to the gesture, the scrolling parameters are adjusted such that the scrolling is maintained for a longer scrolling time period. An intuitive control of said scrolling and of operating the graphical user interface may be achieved.

Likewise, if this gesture relating to a movement of the user object at least partially along the scrolling path is not executed, there may be a high likelihood that the user does not intend to repeat said scrolling by providing a further user input. In this light, the following scenario may be desirable:

The time dependence of the scrolling speed may relate to a deceleration of the scrolling speed over time. If it is detected that the gesture relates to a resting of the user object contactless and above a certain area of the touch sensitive surface, said adjusting of the time dependence may not be executed.

In other words: if the user object rests and does not move after the user input, the time dependence of the scrolling speed and/or the scrolling speed may not be adjusted with respect to the initial parameters which have been used in order to initiate the scrolling. For example, this may be in particular desirable for a scenario where the user input is the touch action of the user object on the touch sensitive surface. Here it may be possible that the certain area comprises an end point of the detected touch action of the user object and/or is arranged at an outer edge of the touch sensitive surface.

The certain area of the touch sensitive surface may be the entire touch sensitive surface or a fraction thereof and/or may be determined in dependence on the detected user input and/or may be dependent on the scrolling path.

For example, if the touch action of the user input relates to a flick touch action between a starting and an end point on the touch sensitive surface, the certain area may comprise this end point of the flick touch action. In other words: if the user performs the flick touch action and afterward does not move the finger anymore, it may be assumed that the user does not wish to repeat this scrolling. Therefore, it may be desirable to leave the scrolling parameters unaltered.

If the touch action is a flick gesture along the first direction, the scrolling path may have a component parallel to this first direction. In other words, the particular type of the flick gesture and/or a direction of the flick gesture may define the scrolling path. This is generally possible for all different kinds of user inputs. For example, if said displaying of the number of menu items comprises displaying the number of menu items as a one-dimensional list on the display, the direction of the flick gesture may define whether said scrolling is executed towards a beginning or towards an end of the one-dimensional list of the number of menu items.

In general, the scrolling speed and/or the time dependence of the scrolling speed may depend on the touch action which is detected as the user input. For example, if the touch action is executed faster (slower), the scrolling speed may be chosen to be larger (smaller). In particular, it is possible that only the scrolling speed depends on the particulars of the touch action, while the time dependence of the scrolling speed, for example a deceleration value of the scrolling speed, remains unchanged equalling a predefined value and is in particular independent of the touch action. Yet it is also possible that the time dependence on the scrolling speed depends on the touch action: for example, if the touch action corresponds to a longer (smaller) distance between the starting point and the end point of the touch action, the time dependence of the scrolling speed may be larger (smaller). The above-discussed dependencies of the scrolling speed and/or the time dependence of the scrolling speed on the touch action are merely exemplatory: various alternatives are conceivable and the dependencies are neither limited qualitatively nor quantitatively.

Said adjusting may be executed if it is detected that the gesture relates to at least one of the following: resting of the user object above a predefined area of the touch sensitive surface; moving of the user object towards and above a predefined area of the touch sensitive surface; moving of the user object at least partially along the scrolling path; moving of the user object at least partially in opposing direction along the scrolling path; a flick gesture; a movement towards the touch sensitive surface; and; a movement away from the touch sensitive surface.

For example, resting of the user object may relate to a substantially constant position of the user object over time. Respectively, moving of the user object may relate to a substantial change in the position of the user object over time. Substantial may refer to at least one of the following: within error margins, within a tolerance interval, within sensing accuracy. Respectively, moving of the user object may relate to a movement of the user object in a plane substantially parallel to the touch sensitive surface or along a direction which has a substantial component parallel to a normal of the touch sensitive surface - latter case may relate to the movement towards or away to and from the touch sensitive surface. The movement towards or away from the touch sensitive surface may relate to a decreasing or increasing of the distance between the user object and the touch sensitive surface.

As can be seen, the gesture may be defined with respect to the invariant properties of the touch sensitive surface and/or the display, i.e. with respect to the edges or the surface of the touch sensitive surface. Alternatively or additionally, the gesture may be defined with respect to properties such as the scrolling path - which may depend on the particular scrolling during which the gesture is executed and therefore may change from time to time.

Said adjusting may refer to at least one of the following: increasing the scrolling speed and/or the time dependence of the scrolling speed by a predefined factor; - decreasing the scrolling speed and/or the time dependence of the scrolling speed by a predefined factor; increasing the scrolling speed and/or the time dependence of the scrolling speed by a factor being dependent on the detected gesture; and decreasing the scrolling speed and/or the time dependence of the scrolling speed by a factor being dependent on the detected gesture.

According to a further aspect, a graphical user interface having a number of menu items is provided. The graphical user interface comprises a processor being configured for displaying the number of menu items at least partially on a display, wherein the graphical user interface is configured for detecting a user input. The processor is further configured for, in response to said detecting of the user input, scrolling through the number of menu items, wherein said scrolling is defined by a time dependence of a scrolling speed along a scrolling path. The graphical user interface further comprises a detector configured for detecting a gesture of a user object above the touch sensitive surface during said scrolling. The processor is further configured for, in response to said detecting of the gesture and during said scrolling, selectively adjusting the time dependence of the scrolling speed and/or adjusting the scrolling speed, wherein said selectively adjusting depends on the detected gesture.

The graphical user interface according to the presently discussed aspect may be further configured to execute the method of operating a graphical user interface according to a further aspect of the present invention.

For such a graphical user interface, effects may be obtained which are comparable to the effects which may be obtained for the method of operating the graphical user interface according to the further aspect of the present invention.

According to a further aspect, a portable device comprising the graphical user interface according to a further aspect of the invention is provided.

The portable device may be one of the following: a mobile phone; a personal digital assistant; a mobile navigation system; a remote control for a television; a remote control for a projector; a remote control for a gaming console; a touch pad; a tablet computer; and a mobile computer.

It is to be understood that the features mentioned above and features yet to be explained below can be used not only in the respective combinations indicated, but also in other combinations or in isolation, without departing from the scope of the present invention. Features of the above-mentioned aspects and embodiments may be combined with each other in other embodiments.

### Brief description of the drawings

In the following, the invention will be explained in further detail with respect to embodiments illustrated in the accompanying drawings.
FIG. 1 is a schematic illustration of a mobile phone comprising a graphical user interface according to various embodiments of the invention.
FIG. 2 is a schematic illustration of a one-dimensional list of menu items displayed on a display of the mobile phone, wherein a scrolling path is furthermore illustrated, wherein scrolling along the scrolling path continuously displays different ones of the menu items.
FIG. 3 is a schematic illustration of a two-dimensional array of menu items displayed on a display of the mobile phone, wherein a scrolling path is furthermore illustrated, wherein scrolling along the scrolling path moves a curser between different ones of the menu items.
FIG. 4 illustrates a time dependence and a scrolling speed for scrolling upon a touch action, wherein the time dependence relates to a linear deceleration.
FIG. 5 illustrates a time dependence of a scrolling speed for scrolling upon a touch action, wherein the time dependence relates to a non-linear deceleration.
FIG. 6 illustrates a scrolling where the time dependence of the scrolling is adapted during the scrolling and in response to a detected gesture.
FIG. 7 illustrates a scrolling where the time dependence of the scrolling is adapted during the scrolling and in response to a detected gesture.
FIG. 8 illustrates a scrolling where the scrolling speed is adapted in response to a detected gesture.
FIG. 9 illustrates a scrolling where the scrolling speed is subsequently adapted three-times during said scrolling and in response to three subsequently detected gesture.
FIG. 10 illustrates a gesture detected contactless and above a touch sensitive surface.
FIG. 11 illustrates a further gesture detected contactless and above a touch sensitive surface.
FIG. 12 is a flowchart of a method of operating the graphical user interface according to various embodiments of the invention.

### Detailed description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations, and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software or a combination thereof. In the following, techniques for operating a graphical user interface, in particular techniques for scrolling through a number of menu items, are presented. The techniques allow adjusting scrolling parameters such as a time dependence and/or a scrolling speed of said scrolling during said scrolling. A large flexibility in the scrolling is achieved. The user may in particular control the scrolling intuitively and flexible. Albeit the graphical user interface is shown in connection with a mobile phone, it may find application in various other units.

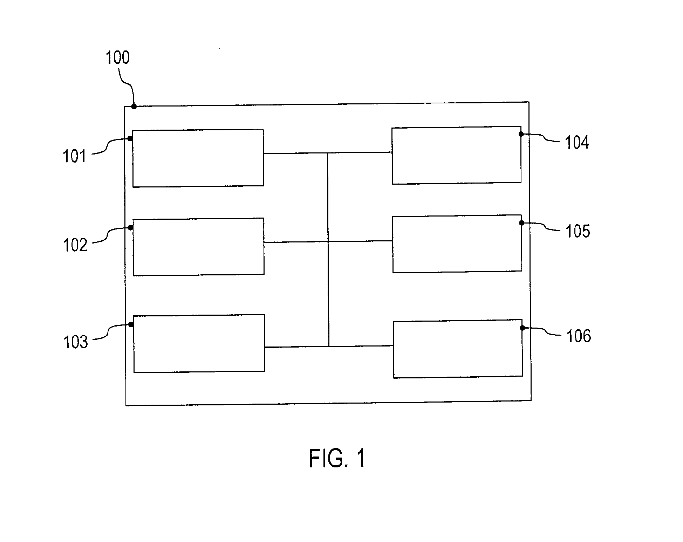

In FIG. 1, a mobile phone 100 is schematically depicted which allows for providing a graphical user interface according to various aspects of the present invention. The mobile phone 100 comprises a processor which is configured for displaying a number of menu items at least partially on a display 104. For this, the processor 101 can be configured to calculate a graphical representation of the menu items, for example based on data stored on a data storage 102 of the mobile phone 100. The mobile phone 100 comprises a touch sensitive surface 103 as well as further user input and output elements, e.g., a detector 106. Via these elements 103, 106, a user may interact with the graphical user interface of the mobile phone 100. Furthermore, the mobile phone 100 comprises a communication interface 105 which is configured for establishing a data connection with other units, e.g., a mobile communications network, etc.

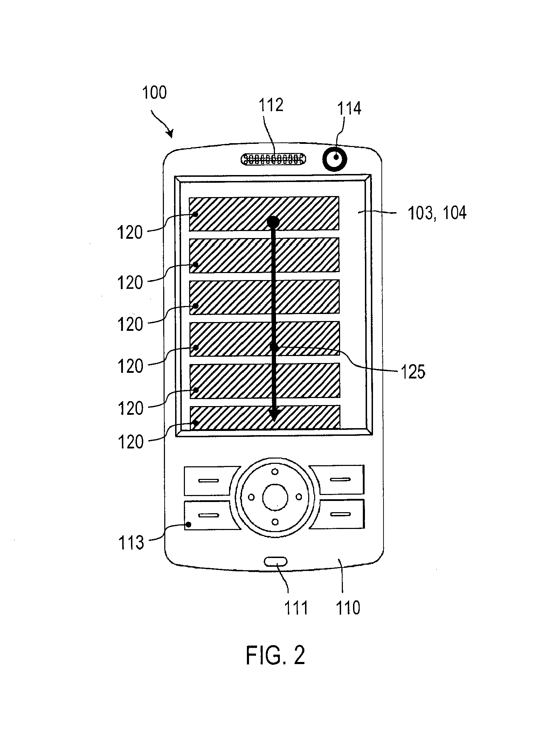

Turning to FIG. 2, techniques with respect to the displaying of the menu items 120 at least partially on the display 104 will be discussed with respect to the top view of the mobile telephone 100. In the scenario of FIG. 2, the touch sensitive surface 103 is integrated with the display 104 as a touch sensitive display. However, it should be understood that in general the display 104 and the touch sensitive surface 103 can be separate entities. As can be seen in FIG. 2, the number of menu items 120 can be displayed on the display 104 using a one-dimensional list arranged substantially along a first direction, wherein the first direction points from an upper end of the display 104 towards a lower end of the display 104. As can be further seen from FIG. 2, the menu item 120 which is displayed on the display 104 at a lowermost position is only partly visible. Because of the limited dimensions of the display 104, it is not possible to display all menu items of the number of menu items 120 at the same time on the display 104. Rather, a certain part of the number of menu items 120 is displayed. A user input may be detected which triggers a scrolling through the number of menu items 120 along a scrolling path 125. Due to said scrolling, the various menu items 120 become sequentially visible on the display 104. In the scenario of FIG. 2, the scrolling path 125 is orientated parallel to the one-dimensional list of menu items 120. The scrolling path 125 points towards the lower edge of the display 104.

For example the user input triggering said scrolling may correspond to a touch action on the touch sensitive surface 103, e.g. a flick touch action or a flick gesture; this touch action may define the scrolling path 125. The touch action may correspond to a gesture being executed in contact and on the touch sensitive surface 103. Other examples of user inputs would be pushing of one of the buttons 113 and/or voice input via microphone 111 and/or shaking of the mobile telephone 100, etc.

Said scrolling through the number of menu items 120 causes different ones of the number of menu items 120 to be displayed on the display 104 over the course of time. In other words: the displayed menu items 120 move through the one-dimensional list along the scrolling path 125. Such techniques of scrolling through a one-dimensional list of menu items 120 are in principle known to the skilled person such that there is no need to explain further details in this context.

As can be further seen from FIG. 2, the mobile phone 100 comprises a body 110, the microphone 111, a loudspeaker 112, and the additional buttons 113. Furthermore, an optical camera 114 is provided house in the body 110 adjacent to the display 104 with the touch sensitive surface 103. The optical camera has a field of view which is centered along a direction which is substantially perpendicular to the touch sensitive surface 103. In other words: the field of view of the optical camera 114 covers a region above the display 104 and above the touch sensitive surface 103. The buttons 113, the optical camera 114, as well as the touch sensitive surface 103 can all be referred to as the detector 106 (cf. FIG. 1). This is because they all allow user interaction with the graphical user interface provided by the mobile phone 100.

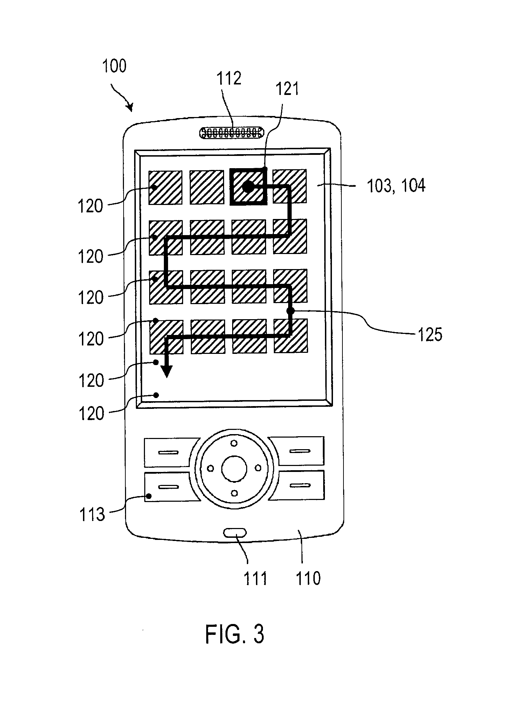

Next, turning to FIG. 3, an alternative scenario of displaying the number of menu items 120 on the display 104 of the portable device 100 is presented. In particular, the number of menu items 120 is displayed as a two-dimensional array of menu items, i.e., in a matrix. One of the menu items 120 is highlighted by means of a curser 121. The particular menu item which can be activated by a user upon user input, e.g. by pushing one of the buttons 113, is therefore defined by the current position of the curser 121. For example, if the user pushes one of the buttons 113, the particular menu item which is highlighted by the curser 121 is activated. Thereby, a certain function, application, piece of data, control setting, etc. may be invoked.

In the scenario as depicted in FIG. 3, the scrolling path 125 follows a particular two-dimensional path through the two-dimensional array of the number of menu items 120. Scrolling through the number of menu items 120 in the scenario of FIG. 3 corresponds to moving the curser 121 along this scrolling path 125. When the curser 121 reaches the first one of the number of menu items 120 or the last one of the number of menu items 120 which are displayed on the display 104, scrolling may additionally comprise displaying a different ones of the number of menu items 120 on the display 104, e.g. correspond to a "page flip".

It should be understood that the particular mode of displaying the number of menu items 120 on the display 104, as well as the particular selection of the scrolling path 125 may be chosen flexibly. For example, it is possible to display the number of menu items 120 in a three-dimensional manner on the display 104. This may be achieved by displaying different ones of the menu items 120 using different sizes on the display 104 thereby creating a three-dimensional impression for a user. While with respect to the FIGs. 2 and 3, a linear arrangement of the number of menu items 120 in one dimension and two dimensions has been discussed, it should be understood that also circular or curved arrangement of the number of menu items 120 are possible. Such alternative ways of displaying the number of menu items 120 may be accompanied by a respectively shaped scrolling path 125.

With respect to the FIGs. 2 and 3, the displaying of the number of menu items 120 on the display 104 has been discussed above. Furthermore, the user input triggering said scrolling along the scrolling path 125 has been discussed. Below, the process of scrolling will be discussed in further detail.

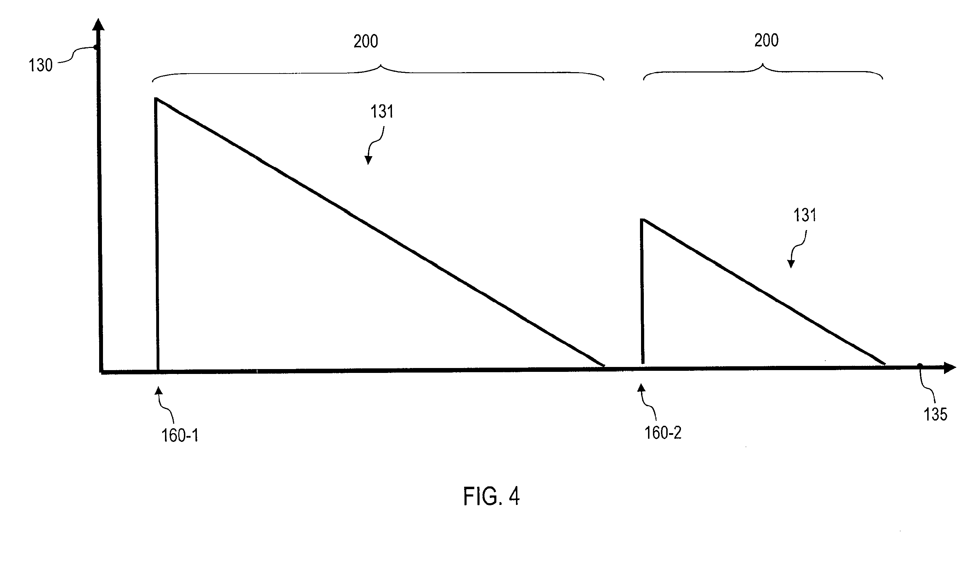

In FIG. 4, the scrolling 200 is schematically depicted by plotting a scrolling speed 130 as a function of time 135. The scrolling speed may relate to a velocity which is used to move along the scrolling path 125; for example, with respect to FIG. 2, the scrolling speed 130 may correspond to the velocity which is used to move through the list of the number of menu items 120. With respect to FIG. 3, the scrolling speed 130 may correspond to the velocity which is used to move the cursor 125. Velocity may correspond to a moved distance on the display 104 per time 135.

As can be seen from FIG. 4, the scrolling 200 is defined by the scrolling speed 130, in particular by an initial scrolling speed 130 which is used at the beginning of said scrolling 200, in response to the detected user input 160-1, 160-2. Moreover, the scrolling 200 is defined by a time dependence 131 of the scrolling speed, wherein the time dependence 131 relates to a change of the scrolling speed 130 over time 135.

In FIG. 4, two user inputs 160-1, 160-2, e.g., touch actions on the touch sensitive surface 103 trigger two subsequent scrolls 200. Because at least the initial scrolling speed 130 depends on the touch action 160-1, 160-2, the scrolling speeds 130 vary for these two scrolls 200. Yet, the time dependence 131 for the two scrolls 200 is the same. The time dependence 131 reflects a deceleration of the scrolling speed 130 over time 135. Respectively, a total duration of each scroll 200 varies. This is graphically indicated in FIG. 4 by the horizontal brackets.

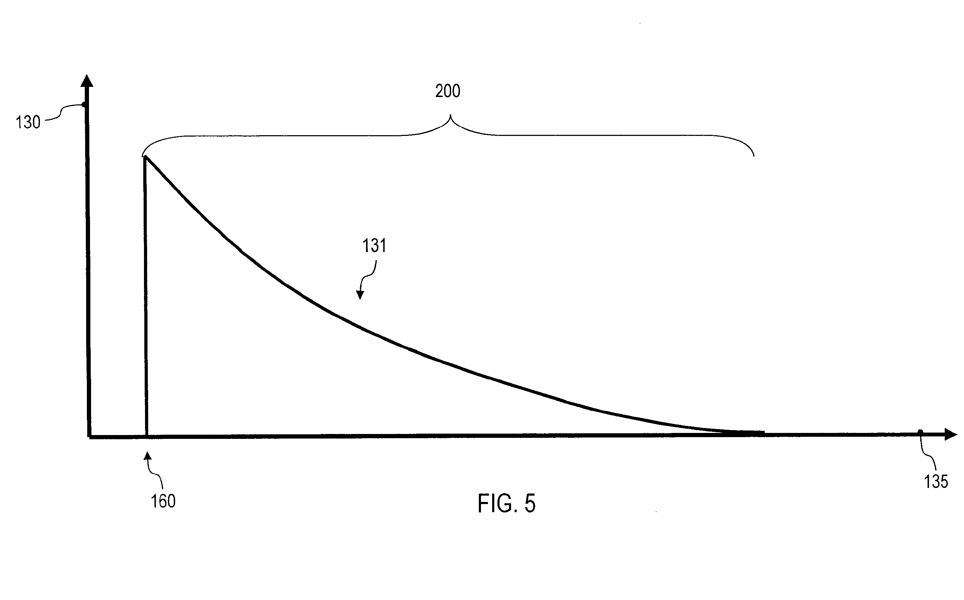

Turning to FIG. 5, a single scroll 200 upon a user input 160 is depicted in a similar fashion as previously discussed with respect to FIG. 4. As can be seen from FIG. 5, the time dependence 131 of the scrolling 200 in FIG. 5 differs from the time dependence 131 of the scrolling 200 in FIG. 4. Namely, while in FIG. 4 a linear deceleration characterizes time dependence 131, in FIG. 5 a non-linear deceleration characterizes the time dependence 131. For example, the time dependence 131 of FIG. 5 may be described by a polynomial or exponential decay of the scrolling speed 130 over time 135. In general, the particular form or functional shape of the time dependence 131 is not specifically limited.

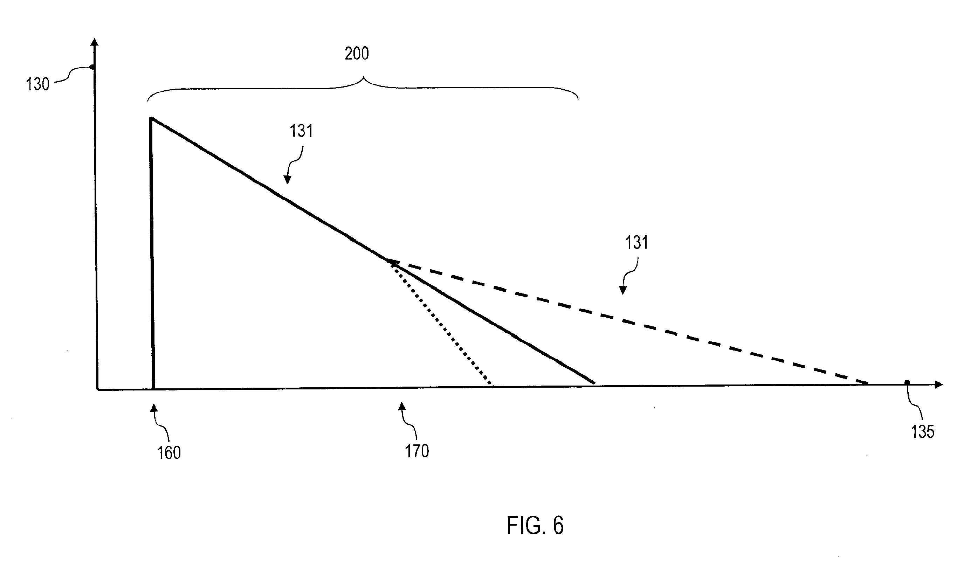

Next, turning to FIG. 6, it is shown how, in response to a detected gesture 170, the time dependence 131 of the scrolling 200 can be adjusted during said scrolling 200. In detail, the full line in FIG. 6 illustrates a scrolling 200 where the time dependence 131 is not adjusted during said scrolling 200; this corresponds to the scenario previously discussed with respect to FIG. 4. In this scenario, a gesture 170 is not detected which would cause an adjusting of the time dependence 131 and/or of the scrolling speed 130. The dashed line and the dotted line in FIG. 6 respectively illustrate scenarios where the time dependence 131 is adjusted in response to a detected gesture 170. In particular, the time dependence 131 is decreased (increased) for the dashed line (dotted line).

This has the effect that, if compared to the scrolling 200 where the time dependence 131 is not adjusted, i.e., the full line in FIG. 6, the scrolling time period increases (decreases) for the dashed line (dotted line). This may have the effect that the scrolling 200 which is initially triggered by the user input 160 covers a larger number of (smaller number of) menu items 120 for the dashed line (dotted line) in FIG. 6. Therefore, the user has the possibility of controlling the scrolling 200 according to his or her needs. While said adjusting in Fig. 6 occurs immediately after said detecting of the gesture 170, a certain latency may be present.

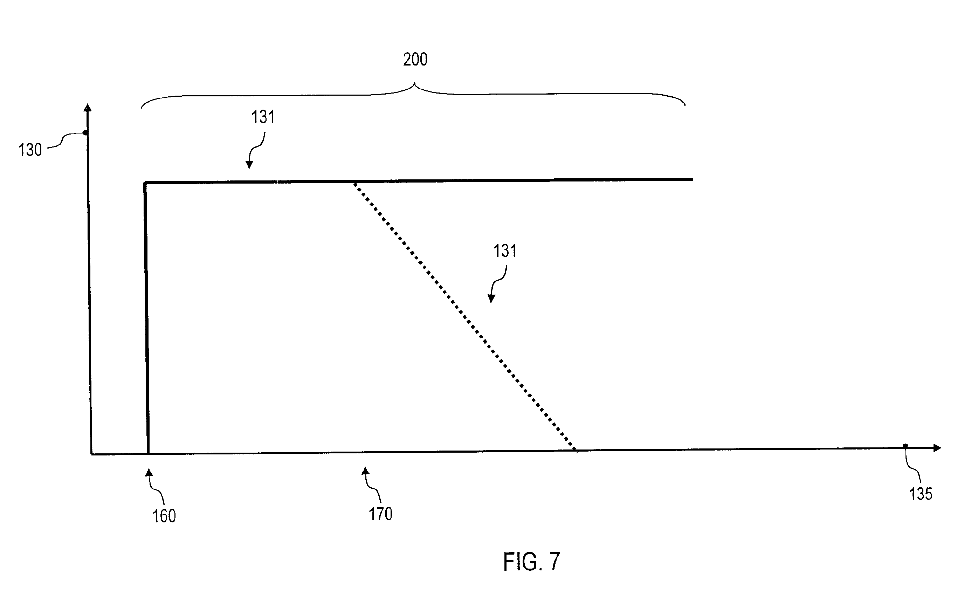

Turning to FIG. 7, an alternative scenario according to various embodiments of the present invention is depicted where again the time dependence 131 of the scrolling speed 130 is adjusted during said scrolling 200. Namely, the initial scrolling 200 triggered by the user input 160 has a time dependence 131 which does not vary the scrolling speed 130 as a function of time (constant scrolling speed 130). Upon the detecting of the gesture 170, this time dependence 131 is changed such that it corresponds to a deceleration of the scrolling speed 130 over time 135.

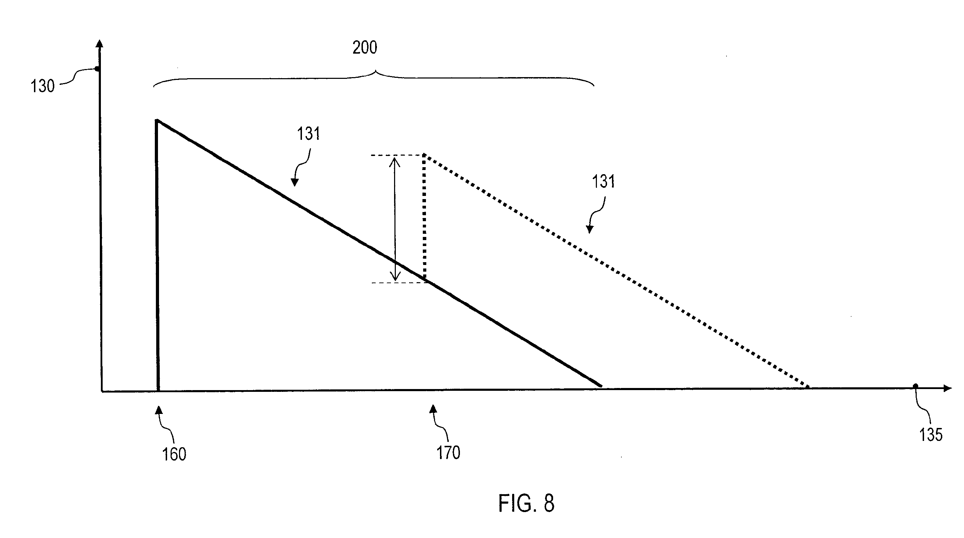

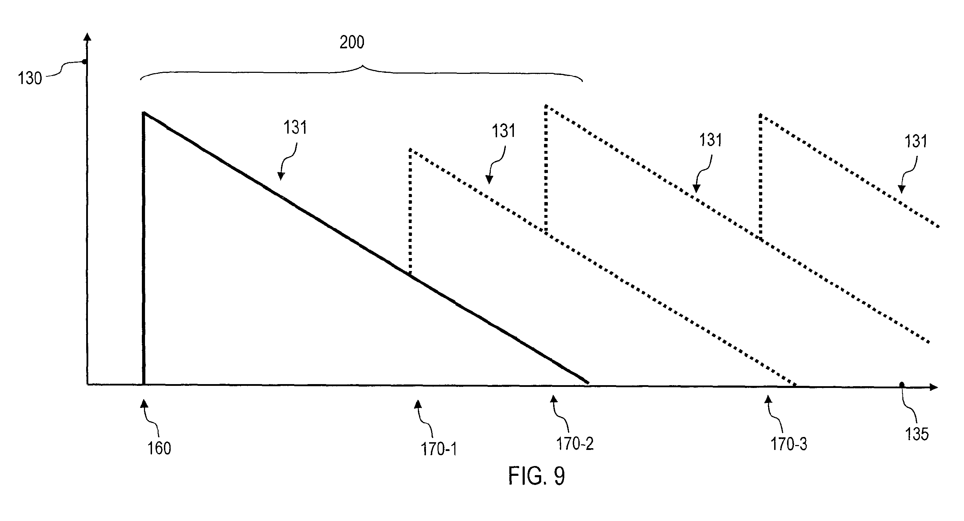

Above, with respect to the FIGs. 6 and 7, scenarios have been discussed where the time dependence 131 of the scrolling speed 130 has been adjusted during said scrolling 200. It should be understood that if the time dependence 131 of the scrolling 200 is adjusted, secondarily and subordinately the scrolling speed 130 may change as well (resulting from the changed time dependence 131). Yet, said adjusting due to the detected gesture 170 may additionally or alternatively act directly on the scrolling speed 130. Below, with respect to FIGs. 8 and 9, scenarios will be discussed where the scrolling speed 130 is adjusted upon the detected gesture 170 during said scrolling 200, i.e., directly changed.

Namely, in FIG. 8 it can be seen that upon the detected gesture 170 the scrolling speed 130 is changed - whereas the time dependence 131 of said scrolling 200 is left unaltered. Yet in general scenarios are possible where both the time dependence 131 as well as the scrolling speed 130 are adjusted.

Furthermore indicated in FIG. 8 by the vertical arrow is an amount of said adjusting of the scrolling speed 130. The amount of said adjusting of the scrolling speed 130 may depend on the gesture 170, e.g., on a type of the gesture and/or an amplitude of movement of the gesture 170. Likewise, the amount of said adjusting of the time dependence 131 can depend on the gesture 170 (cf. FIGs. 6 and 7). In particular, the time dependence 131 may be quantified by a change of the scrolling speed 130 per time 135. An amount of said adjusting of the time dependence 131 can correspond to changing this value.

Next, turning to FIG. 9, a sequence of three detected gestures 170-1, 170-2, 170-3 is depicted. As can be seen, the techniques as described above with respect to the FIGs. 6-8 can be readily applied to a plurality of detected gestures 170-1, 170-2, 170-3 as in the case of FIG. 9. In other words, said adjusting of the time dependence 131 and/or of the scrolling speed 130 may be executed a plurality of times in response to a plurality of detected gestures 170.

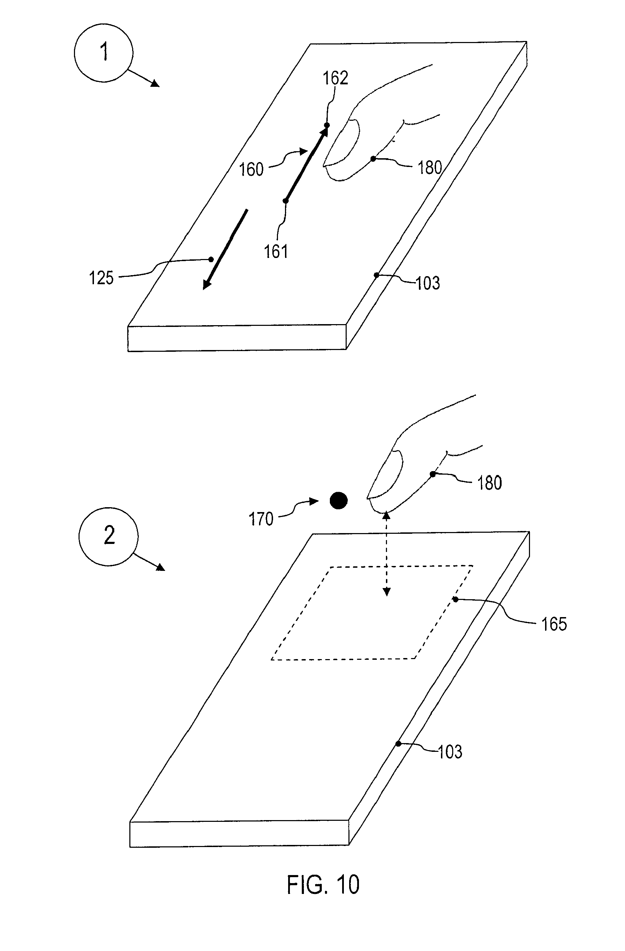

Turning to FIG. 10, a time sequence of the user input 160 and the detected gesture 170 is schematically indicated. In FIG. 10, the index finger 180 of a user is used as a user object in order to execute the touch action 160 as the user input and the gesture 170. The upper part of FIG. 10, labeled with an encircled 1, indicates the detecting of the touch action 160 occurring at a first point in time - while the lower part of FIG. 10, labeled with an encircled 2, illustrates the detecting of the gesture 170 at a second point in time, wherein the second point in time is later than the first point in time.

The touch action 160 corresponds to a flick gesture between a starting point 161 and an end point 162 on the touch sensitive surface 130. For example, this touch action 160 can cause said scrolling 200 to occur along the scrolling path 125 which is orientated substantially parallel to the flick gesture between the starting point 161 and the end point 162, but in opposing direction.

The detected gesture 170 in the case of FIG. 10, lower part, corresponds to a resting of the index finger 180 above a certain area 165 of the touch sensitive surface 103. In other words, the gesture 170 occurs contactless and above the touch sensitive surface 103. This is graphically indicated in FIG. 10 by the dashed vertical arrow. The certain area 165 comprises the end point 162 of the touch action 160.

In the scenario graphically illustrated in FIG. 10, it may be desirable to not execute said selective adjusting of the time dependence 131 and/or the scrolling speed 130 during said scrolling 200. This may be because of the particular type of the gesture 170 relating to a resting of the index finger 180 above the certain area 165. Of course, different criteria for not executing or executing said selective adjusting of the time dependence 131 and/or of the scrolling speed 130 in dependence of the particular gesture 170 may be established.

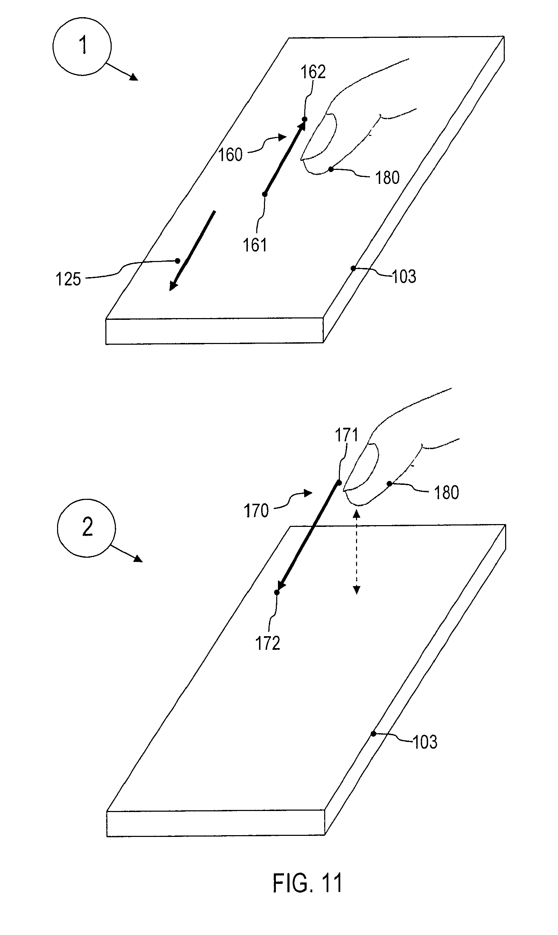

Respectively, with respect to FIG. 11, scenarios are graphically illustrated, where said selective adjusting of the time dependence 131 and/or the scrolling speed 130 may be desirable. In particular, the touch action (upper part of FIG. 11) corresponds to the scenario as described previously with respect to FIG. 10. However, the detected gesture 170 relates to a movement of the index finger 180 between a starting point 171 and an end point 172 contactless and above the touch sensitive surface 103, as well as substantially parallel to the scrolling path 125. Such a gesture 170 is likely to occur if the user intends to repeat said scrolling 200 for a second time (cf. FIG. 4). Therefore, in such a case it may be desirable to adjust the time dependence 131 of said scrolling 200 such that the scrolling time period is increased. This may correspond to a decrease of the time dependence 131.

In order to detect the gesture 170 above the touch sensitive surface 131, various techniques may be employed. For example, the touch sensitive surface 131 may comprise capacitive sensors which sense a change in the stray electric field. It may alternatively or additionally be possible to employ the camera 114 in order to monitor the position over time 135 of the user object 180 above the touch sensitive surface 103. Other techniques are known to the skilled person such that there is no need to explain further details in this context.

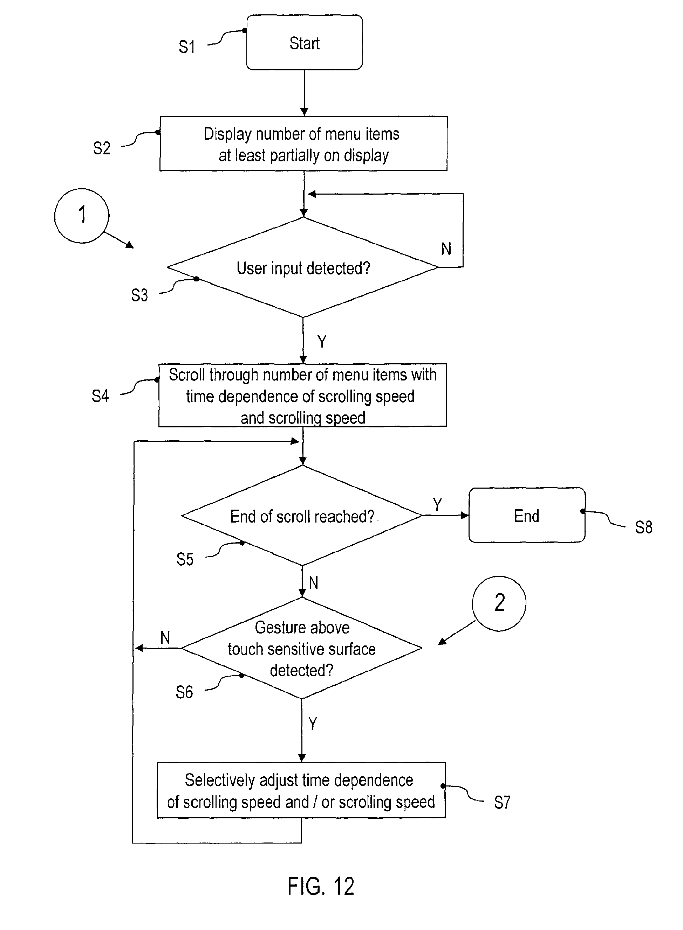

In FIG. 12, a flow chart of a method of operating a graphical user interface according to various embodiments of the present invention is depicted. The method starts in step S1. In step S2, the number of menu items 120 is at least partially displayed on the display 104.

In step S3, it is checked whether the user input 160 is detected. For example, the user input 160 can correspond to a touch action on the touch sensitive surface 103.

The touch action can correspond to a flick gesture in order to initiate said scrolling 200.

When in step S3 the user input 160 is not detected, step S3 may be repeated after a given idle time. Otherwise, if a user input 160 is detected in step S3, the method proceeds to step S4. In step S4, said scrolling 200 through the number of menu items 120 is initiated with a given time dependence 131 and a given scrolling speed 130.

In step S5, it is checked whether the end of the scrolling 200 has been reached, i.e., if the scrolling speed 130 has dropped to zero due to the given time dependence 131. If the end of said scrolling 200 has been reached in step S5, the method ends with step S8. However, if the end of the scroll has not been reached in step S5, the method commences with step S6.

In step S6 it is checked whether the gesture 170 is detected contactless and above the touch sensitive surface 131. If this is not the case, the method jumps back to step S5, i.e. it is checked whether the end of the scrolling 200 has been reached, e.g., after an idle time.

However, in step S6 the gesture 170 is detected above the touch sensitive surface 131, in step S7 the time dependence 131 of the scrolling speed 130 and/or the scrolling speed 130 are selectively adjusted. This means that the scrolling parameters as used in step S4 are selectively changed. This may occur with a certain latency after step S6 or immediately after said detecting of the gesture 170. Certain gestures 170 may cause a substantial change in the scrolling parameters 130, 131, while other gestures 170 may cause no adjusting to take place.

After the execution of step S7, the method commences with step S5.

Furthermore illustrated in FIG.12 are the two points in time 135 which are labeled with encircled 1 and 2 (cf. FIGs. 10 and 11).

For example, it may be possible that for each scroll 200, i.e., each execution of the steps S1 - S8, information on the time dependence 131 and / or the scrolling speed 130 is stored in a memory, e.g., before step S8. It may be possible to select the scrolling speed 130 and / or the time dependence 131 in dependence on this stored information, i.e., select based on personalized preferences and / or historical behavior. This may in particular apply to said adjusting: said adjusting of the time dependence 131 and / or the scrolling speed 130 in response to said detecting of the gesture 170 may depend on personalized preferences and / or historical behavior.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims. While above primarily scenarios have been discussed where the time dependence of the scrolling speed and / or the scrolling speed have been adjusted in response to said detecting of the gesture, alternatively or additionally it may be possible to adapt said displaying of the number of menu items in response to said detecting of the gesture. For example, it may be possible the adapt a visual representation of the number of menu items, e.g., a spacing of adjacent ones of the number of menu items, angular arrangement between adjacent ones of the number of menu items, size of various ones of the number of menu items, color of various ones of the number of menu items, visual style of various ones of the number of menu items, and / or position in z-space of various ones of the number of menu items.

## Claims

1. A method of operating a graphical user interface having a number of menu items (120), comprising:
- displaying the number of menu items (120) at least partially on a display (104),
- detecting a user input (160, 160-1, 160-2),
- in response to said detecting of the user input (160, 160-1, 160-2), scrolling (200) through the number of menu items (120),
wherein said scrolling (200) is defined by a time dependence (131) of a scrolling speed (130) along a scrolling path (125),
- during said scrolling (200), detecting a gesture (170, 170-1, 170-2, 170-3) of a user object (180) contactless and above a touch sensitive surface (103), and
- in response to said detecting of the gesture (170, 170-1, 170-2, 170-3) and during said scrolling (200), selectively adjusting the time dependence (131) of the scrolling speed (130) and/or selectively adjusting the scrolling speed (130),
wherein said selectively adjusting depends on the detected gesture (170, 170-1, 170-2, 170-3).

2. The method of claim 1,
wherein the time dependence (131) of the scrolling speed (130) relates to a deceleration of the scrolling speed (130) over time, and
wherein, if it is detected that the gesture (170, 170-1, 170-2, 170-3) relates to a movement of the user object (180) at least partially along the scrolling path (125) contactless and above the touch sensitive surface (103), the time dependence (131) is adjusted such that the deceleration of the scrolling speed (130) is decreased.

3. The method of any one of claims 1 or 2,
wherein the time dependence (131) of the scrolling speed (130) relates to a deceleration of the scrolling speed (130) over time, and
wherein, if it is detected that the gesture (170, 170-1, 170-2, 170-3) relates to a resting of the user object (180) contactless and above a certain area (165) of the touch sensitive surface (103), said adjusting of the time dependence (131) is not executed.

4. The method of any one of the preceding claims,
wherein the user input (160, 160-1, 160-2) is a touch action (160, 160-1, 160-2) of the user object (180) on the touch sensitive surface (103).

5. The method of claims 3 and 4,
wherein the certain area (165) comprises an end point (162) of the detected touch action (160, 160-1, 160-2) of the user object (180) and/or is arranged at an outer edge of the touch sensitive surface (103).

6. The method of any one of claims 4 or 5,
wherein the touch action (160, 160-1, 160-2) is a flick gesture (170, 170-1, 170-2, 170-3) along a first direction,
wherein the scrolling path (125) has a component parallel to the first direction.

7. The method of any one of claims 4 - 6,
wherein the scrolling speed (130) and/or the time dependence (131) of the scrolling speed (130) depend on the touch action (160, 160-1, 160-2).

8. The method of any one of the preceding claims,
wherein said adjusting is executed if it is detected that the gesture (170, 170-1, 170-2, 170-3) relates to at least one of the following:
- resting of the user object (180) above a predefined area of the touch sensitive surface (103);
- moving of the user object (180) towards and above a predefined area of the touch sensitive surface (103);
- moving of the user object (180) at least partially along the scrolling path (125);
- moving of the user object (180) at least partially in opposing direction along the scrolling path (125);
- a flick gesture (170, 170-1, 170-2, 170-3);
- a movement towards the touch sensitive surface (103); and
- a movement away from the touch sensitive surface (103).

9. The method of any one of the preceding claims,
wherein said adjusting relates to at least one of the following:
- increasing the scrolling speed (130) and/or the time dependence (131) of the scrolling speed (130) by a predefined factor;
- decreasing the scrolling speed (130) and/or the time dependence (131) of the scrolling speed (130) by a predefined factor;
- increasing the scrolling speed (130) and/or the time dependence (131) of the scrolling speed (130) by a factor being dependent on the detected gesture (170, 170-1, 170-2, 170-3); and
- decreasing the scrolling speed (130) and/or the time dependence (131) of the scrolling speed (130) by a factor being dependent on the detected gesture (170, 170-1, 170-2, 170-3).

10. The method of any one of the preceding claims,
wherein said displaying comprises displaying the number of menu items (120) in a one-dimensional list arranged along a first direction,
wherein the scrolling path (125) is substantially linear along the first direction.

11. The method of any one of the preceding claims,
wherein said scrolling (200) through the number of menu items (120) relates to at least one of the following:
- continuously displaying different ones of the number of menu items (120);
- moving a cursor between different ones of the number of menu items (120).

12. A graphical user interface having a number of menu items (120), comprising:
- a processor (101) being configured for displaying the number of menu items (120) at least partially on a display (104),
wherein the graphical user interface is configured for detecting a user input (160, 160-1, 160-2),
wherein the processor (101) is further configured for:
- in response to said detecting of the user input (160, 160-1, 160-2), scrolling (200) through the number of menu items (120),
wherein said scrolling (200) is defined by a time dependence (131) of a scrolling speed (130) along a scrolling path (125),
- a detector (106) configured for detecting a gesture (170, 170-1, 170-2, 170-3) of a user object (180) above the touch sensitive surface (103) during said scrolling (200),
wherein the processor (101) is further configured for, in response to said detecting of the gesture (170, 170-1, 170-2, 170-3) and during said scrolling (200), selectively adjusting the time dependence (131) of the scrolling speed (130) and/or adjusting the scrolling speed (130),
wherein said selectively adjusting depends on the detected gesture (170, 170-1, 170-2, 170-3).

13. The graphical user interface of claim 12, further configured for executing the method of any one of claims 1 - 11.

14. A portable device (100) comprising the graphical user interface of any one of the claims 12 or 13.

15. The portable device of claim 14,
wherein the portable device (100) is one of the following:
- a mobile phone;
- a personal digital assistant;
- a mobile navigation system;
- a remote control for a television;
- a remote control for a projector;
- a remote control for a gaming console;
- a tablet computer;
- a touch pad; and
- a mobile computer.
